(19) Europäisches Patentamt

European Patent Office

Office européen des brevets

(11) Veröffentlichungsnummer: **0 507 130 A2**

(12) **EUROPÄISCHE PATENTANMELDUNG**

(21) Anmeldenummer: **92104366.7**

(22) Anmeldetag: **13.03.92**

(51) Int. Cl.⁵: **G01J 3/04**, G21K 1/04

(30) Priorität: **04.04.91 DE 4110839**

(43) Veröffentlichungstag der Anmeldung:
**07.10.92 Patentblatt 92/41**

(84) Benannte Vertragsstaaten:
**DE DK FR GB IT**

(71) Anmelder: **Firma Carl Zeiss**

**W-7920 Heidenheim (Brenz)(DE)**

㊷ **DE DK FR IT**

(71) Anmelder: **CARL-ZEISS-STIFTUNG,**
**HANDELND ALS CARL ZEISS**

**W-7920 Heidenheim an der Brenz(DE)**

㊷ **GB**

(72) Erfinder: **Träger, Rolf**
**Hegelstrasse 124**
**W-7080 Aalen(DE)**

(54) **Präzisionsspalt einstellbarer Breite.**

(57) Präzisionsspalt einstellbarer Breite, bei dem jede Spaltbacke über mindestens zwei einander gegenüberliegende Führungs-Parallelogramme geführt ist und bei dem zur Einstellung der Spaltbreite ein einziges, gemeinsam auf die Führungs-Parallelogramme einer Seite wirkendes, senkrecht zur Bewegungsrichtung der Spaltbacken verstellbares Einstellglied vorgesehen ist. Die Führungs-Parallelogramme sind als Feder-Parallelogramme ausgebildet, wobei eine monolithisch aus einer Platte aus federndem Material hergestellte Ausführungsform besondere Vorteile hat.

FIG. 3

EP 0 507 130 A2

Die vorliegende Erfindung betrifft einen Präzisionsspalt einstellbarer Breite nach dem Oberbegriff des Anspruchs 1.

Solche Präzisionsspalte finden beispielsweise Verwendung als Ein- oder Austrittsspalt in Monochromatoren, Spektralphotometern oder anderen Spektralgeräten, die im infraroten, sichtbaren, ultravioletten oder auch im Bereich der Röntgenstrahlung arbeiten. Dabei kommt es darauf an, die Spalte sehr genau und reproduzierbar einstellen zu können. Der Verstellmechanismus für die Spaltbacken muß weitgehend spielfrei arbeiten und muß in jeder Einstellposition eine exakte Parallelität der den Spalt begrenzenden Kanten der Spaltbacken gewährleisten.

Aus der US-PS 2 587 451 ist ein Spalt für spektroskopische Geräte bekannt, bei dem die Spaltbacken auf Hebeln angeordnet sind, die in Führungen verschiebbar gelagert sind. Zur Einstellung der Spaltbreite dient ein Element, das über Federn sowohl an diesen Hebeln, als auch an einem Einstellglied anliegt. Bei dieser Lösung ist die Genauigkeit durch die Führungen der Spaltbacken-Hebel und die Reibung in diesen Führungen begrenzt.

Ein Spalt für ein Spektralphotometer bei dem der Bewegungsmechanismus der Spaltbacken ohne Führungen arbeitet ist aus der DD-PS 42 809 bekannt. Bei dieser Lösung ist jede Spaltbacke mittels eines Parallelogramms geführt und mit einer Seite dieses Parallelogramms verbunden. Der Verstellmechanismus ist als Hebelgestänge ausgebildet, das auf eines der Parallelogramme einwirkt. Dieses ist über ein weiteres Hebelgestänge mit dem Parallelogramm des zweiten Spaltbackens kraftschlüssig verbunden. Da am Kontaktpunkt der beiden Hebelgestänge Reibung auftritt, ist eine absolute Reproduzierbarkeit der Einstellung nicht gegeben. Außerdem ist bei dieser Führung der Spaltbacken nicht gewährleistet, daß die den Spalt begrenzenden Kanten in jeder Einstellage exakt parallel zueinander verlaufen.

Es ist nun die Aufgabe der vorliegenden Erfindung einen Präzisionsspalt einstellbarer Breite zu schaffen, dessen Einstellung sehr genau und reproduzierbar ist und bei dem in jeder Einstellage gewährleistet ist, daß die den Spalt begrenzenden Kanten der Spaltbacken exakt parallel zueinander verlaufen.

Diese Aufgabe wird durch einen Spalt gelöst, der nach den kennzeichnenden Merkmalen des Anspruchs 1 aufgebaut ist.

Bei dem Präzisionsspalt nach der Erfindung ist jede Spaltbacke mittels zweier Parallelogramme geführt, die auf verschiedenen Seiten des die Spaltbacke tragenden Hebels angeordnet sind. Damit ist gewährleistet, daß die den Spalt begrenzenden Kanten der Spaltbacken in jeder Einstellung exakt parallel zueinander verlaufen. Zur Einstellung der Spaltbreite ist ein einziges Einstellelement vorgesehen, das gleichzeitig auf alle Führungs-Parallelogramme einwirkt und an dem diese Parallelogramme kraftschlüssig anliegen. Damit wird die Einstellung der Spaltbreite mit hoher Präzision und Reproduzierbarkeit bewirkt.

Die kraftschlüssige Verbindung zwischen Einstellelement und den Führungsparallelogrammen kann durch gesonderte Federn bewirkt werden. Ganz besonders vorteilhaft ist es jedoch, die Führungsparallelogramme als Feder-Parallelogramme z.B. aus Blattfedern auszubilden.

Weitere zweckmäßige Ausgestaltungen des Präzisionsspaltes nach der Erfindung sind Gegenstand der Unteransprüche 4-11.

Dabei betreffen die Ansprüche 4-6 Ausbildungen der Führungsparallelogramme und die Ansprüche 7-10 Mechanismen zur Bewegung des Einstellgliedes für die Einstellung der Spaltbreite.

Eine ganz besonders vorteilhafte Ausführungsform ist Gegenstand des Anspruches 11. Die dort beschriebene monolithische Ausbildung ermöglicht es höchste Genauigkeit und Reproduzierbarkeit zu erreichen.

Die Erfindung wird im folgenden anhand der Figuren 1-3 der beigefügten Zeichnungen näher erläutert. Dabei zeigen:

Figur 1    ein Ausführungsbeispiel des Präzisionsspaltes, sowie einen Hebelmechanismus zur Einstellung der Spaltbreite;

Figur 2    ein anderes Ausführungsbeispiel sowie die Einstellung über ein elektromotorisches Element;

Figur 3    ein drittes Ausführungsbeispiel, bei dem der Spalt und die Führungs-Parallelogramme monolithisch ausgebildet sind.

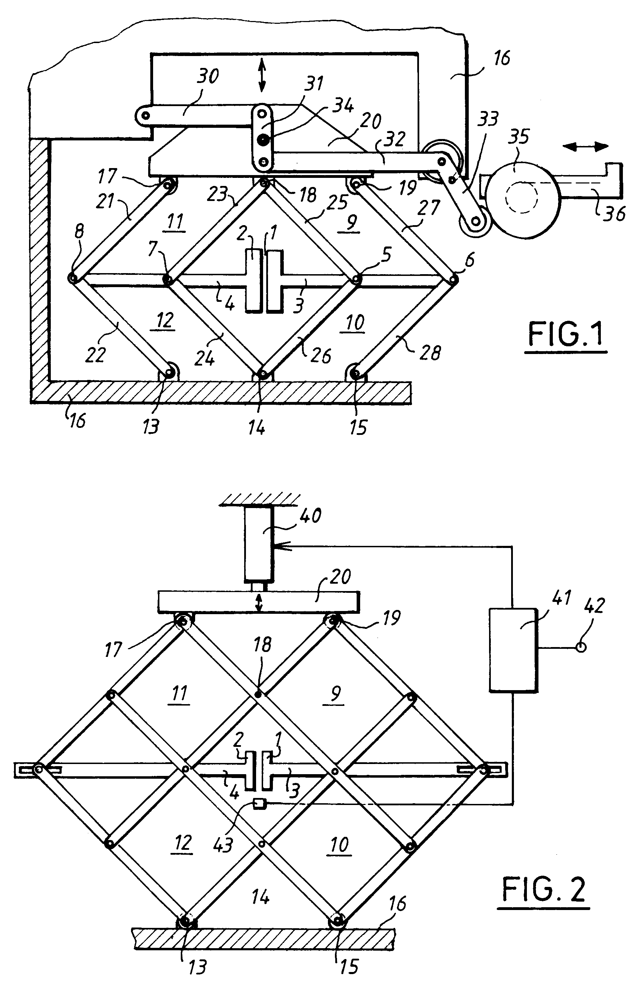

In Figur 1 sind die beiden Backen eines Präzisionsspaltes mit (1) und (2) bezeichnet. Die Spaltbacken sind auf Hebeln oder Trägern (3) und (4) befestigt, die vier Gelenkpunkte (5, 6, 7, 8) tragen. Diese Gelenkpunkte gehören zu vier Führungs-Parallelogrammen (9, 10, 11, 12). Jeder Spaltbacke sind zwei Führungs-Parallelogramme zugeordnet, die auf gegenüberliegenden Seiten der die Spaltbacken tragenden Hebel angeordnet sind. So sind der Spaltbacke (1) mit dem Hebel (3) die Parallelogramme (9) und (10) zugeordnet.

Die Führungs-Parallelogramme (10) und (12) weisen neben den Gelenkpunkten (5, 6, 7, 8) drei weitere Gelenkpunkte (13, 14, 15) auf, die auf der Basis (16) ortsfest angeordnet sind. Entsprechend weisen die Parallelogramme (9) und (11) drei weitere Gelenkpunkte (17, 18, 19) auf, die an einem Einstellglied (20) anliegen. Dieses Einstellglied ist in Richtung des Doppelpfeils bewegbar.

Die Seiten (21-28) der Führungs-Parallelogramme (9-12) sind zweckmäßig als Blattfedern ausgebildet, so daß die Gelenkpunkte (17, 18, 19) kraftschlüssig am Einstellglied (20) anliegen. Bei einer Abwärtsbewegung des Einstellgliedes (20) werden die Hebel (3) und (4) und damit die Spaltbacken (1) und (2) auseinanderbewegt, wobei durch die Parallelogramme (9-12) die Spaltbacken (1) und (2) absolut parallel gehalten werden. Bei einer nachfolgenden Aufwärtsbewegung des Einstellgliedes (20) bleiben die Gelenkpunkte (17-19) durch die Federwirkung der Parallelogramme (9-12) kraftschlüssig mit dem Einstellglied verbunden und der Spalt (1, 2) schließt sich wieder.

Zur Bewegung des Einstellgliedes (20) ist im Beispiel der Figur 1 ein aus den Gliedern (30-33) bestehendes Hebelgestänge vorgesehen. Die einzelnen Hebel sind gelenkig miteinander verbunden und die Hebel (30) und (32, 33) sind gelenkig mit der Basis (16) verbunden. Das Einstellglied (20) ist im Punkt (34) gelenkig mit dem Hebel (31) verbunden.

Auf den Hebelarm (33) wirkt eine Kurvenscheibe (35) ein, die beispielsweise über eine in Richtung des Doppelpfeils bewegte Zahnstange (36) gedreht wird.

Die Einstellung der Breite des Spaltes (1, 2) wird durch Bewegen der Zahnstange (36) bewirkt. Die Kurvenscheibe (35) dient dabei zur Linearisierung der Einstellbewegung. Wird der Hebel (32, 33) durch die Kurvenscheibe (35) bewegt, so führt der Punkt (34) und damit das Einstellglied (20) eine auf einer senkrechten Geraden liegende Bewegung aus und verstellt damit die Spaltbreite.

Das Hebelgestänge (30, 33) stellt einen Wattschen-Lenker dar, der dem Punkt (34) nur einen Freiheitsgrad der Bewegung gibt.

Die Drehung der Kurvenscheibe (35) kann auch über andere Getriebe bewirkt werden, z.B. über einen Schneckentrieb. Die Kurvenscheibe (35) selber ist zweckmäßig auswechselbar angeordnet.

Prinzipiell läßt sich das Einstellglied (20) auch über andere Antriebselemente, z.B. über einen elektromotorischen Antrieb bewegen.

Es ist möglich alle Gelenke der Führungs-Parallelogramme (9-12) als Federgelenke auszubilden, die so vorgespannt sind, daß ein kraftschlüssiges Anliegen der Gelenkpunkte (17-19) gewährleistet ist. Die Seiten der Parallelogramme können dann aus starrem Material ausgebildet sein.

Bei der Bewegung des Einstellgliedes (20) werden gleichzeitig alle Führungs-Parallelogramme (9-12) bewegt, ohne daß ein Schlupf in der Bewegung auftritt.

Bei dem in Figur 2 dargestellten Ausführungsbeispiel sind die Führungs-Parallelogramme (9-12) anders angeordnet als in Figur 1. Die Gelenkpunkte (13) und (15) liegen auf der Basis (16) auf und die Gelenkpunkte (17) und (19] liegen kraftschlüssig am Einstellglied (20) an.

Das Einstellglied (20) wird im Beispiel der Figur 2 durch ein elektromotorisches Element (40) in Richtung des Doppelpfeils bewegt. Das Element (40) kann beispielsweise als Piezoantrieb oder als Linearmotor ausgebildet sein.

Um eine sehr exakte Einstellung der Breite des Spaltes (1, 2) zu erreichen, ist ein schematisch dargestellter Positionierregelkreis (41) vorgesehen. Diesem wird bei (42) ein Signal zugeführt, das der Soll-Spaltweite proportional ist. Über einen schematisch dargestellten Sensor (43) wird ein Signal erzeugt, das der Ist-Spaltweite proportional ist. Der Regelkreis (41) erzeugt solange ein Signal zur Bewegung des Motorelementes (40) bis Ist- und Soll-Spaltweite übereinstimmen.

Der Sensor (43) kann beispielsweise als optischer Spaltbreitenmesser ausgebildet sein. Solche Geräte sind bekannt, so daß auf ihre Darstellung verzichtet wird.

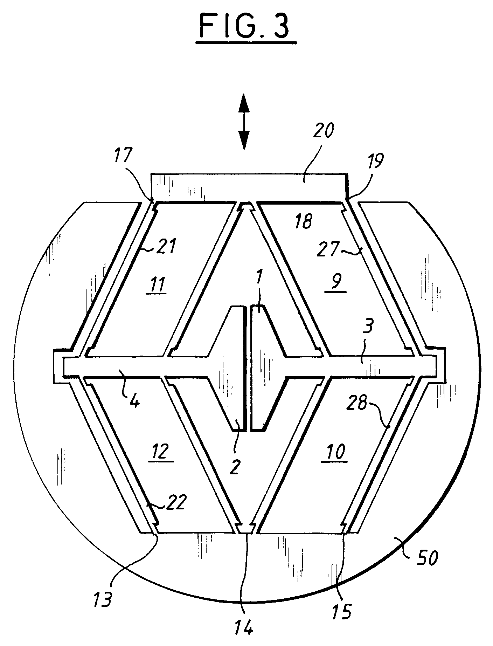

In Figur 3 ist mit (50) eine Platte aus federndem Material, z.B. aus Federstahl bezeichnet. Aus dieser Platte sind beispielsweise mittels eines Erosionsdrahtes alle Teile des Präzisionsspaltes in einer Ausführungsform entsprechend Figur 2 ausgeschnitten, so daß ein monolithisches Gebilde entstanden ist. Dieses umfaßt die Spaltbacken (1) und (2), die Spaltbackenträger (3) und (4), sowie die an diesen angelenkten Führungs-Parallelogramme (9-12). Die Gelenkpunkte (13-15) der Parallelogramme (10) und (12) sind mit der Platte (50) verbunden. Dabei sind die Parallelogrammseiten jeweils in den als Gelenkpunkten verwendeten Verbindungspunkten verdünnt, um möglichst optimale Gelenkeigenschaften zu erreichen.

Es ist zweckmäßig auch das Einstellglied (20) monolithisch aus der Platte (50) auszuschneiden, so daß die Gelenkpunkte (17-19) fest und gelenkig mit diesem Glied verbunden sind.

Die Parallelogrammseiten (21, 22, 27, 28) und die Träger (3, 4) haben einen Abstand zur stehengebliebenen Platte (50). Dieser spaltförmige Abstand begrenzt den Bewegungsbereich der Spaltbacken (1) und (2) . Dies ist besonders vorteilhaft, da eine Beschädigung der Gelenke durch eine eventuelle Überdehnung bei einem Stoß mit Sicherheit vermieden wird.

Der beschriebene und dargestellte Präzisionsspalt findet vorteilhaft Verwendung in Spektralgeräten, die mit Strahlung im Röntgenbereich arbeiten. Hier kommt es besonders auf eine exakte Spaltbreiteneinstellung, eine hohe Reproduzierbarkeit der Einstellung sowie auf die Parallelität der die Spaltbreite begrenzenden Kanten der Spaltbacken an.

Der Präzisionsspalt nach der vorliegenden Ausführung hat beispielsweise in der Ausführung der Figur 3 einen Verstellbereich der zwischen 1 und 5 mm liegt. Jede in diesem Bereich liegende Spaltbreite läßt sich sehr exakt einstellen.

**Patentansprüche**

1. Präzisionsspalt einstellbarer Breite für Spektralgeräte, bei dem die Spaltbacken mittels eines als Parallelogramm ausgebildeten Hebelgestänges geführt sind, dadurch gekennzeichnet, daß jede Spaltbacke (1, 2) von einem Hebel (3, 4) getragen ist, der gelenkig mit mindestens zwei auf gegenüberliegenden Hebelseiten angeordneten Führungs-Parallelogrammen (9, 10) bzw. (11, 12) verbunden ist und der eine gemeinsame Seite dieser Parallelogramme bildet und daß zur Einstellung der Spaltbreite ein, gemeinsam auf die Führungs-Parallelogramme (9, 11) einer Hebelseite wirkendes, kraftschlüssig mit dieser verbundenes und senkrecht zur Bewegungsrichtung der Spaltbacken (1, 2) verstellbares Einstellglied (20) vorgesehen ist.

2. Präzisionsspalt nach Anspruch 1, dadurch gekennzeichnet, daß die Führungs-Parallelogramme (9-12) als Feder-Parallelogramme ausgebildet sind.

3. Präzisionsspalt nach Anspruch 2, dadurch gekennzeichnet, daß die Führungs-Parallelogramme (9-12) aus Blattfedern bestehen.

4. Präzisionsspalt nach Anspruch 1-3, dadurch gekennzeichnet, daß die die Spaltbacken (1, 2) tragenden Hebel (3, 4) die Diagonale eines Gelenk-Vierecks bilden, dessen gelenkig miteinander verbundene Seiten (23, 25) bzw. (24, 26) jeweils eine Seite eines, außerhalb des Gelenk-Vierecks liegenden Führungs-Parallelogramms (9, 11) bzw. (10, 12) bilden.

5. Präzisionsspalt nach Anspruch 1-4, dadurch gekennzeichnet, daß vier Gelenkpunkte (5-8) der Führungs-Parallelogramme (9-12) auf den die Spaltbacken (1, 2) tragenden Hebeln (3, 4) und die übrigen Gelenkpunkte (13-15) bzw. (17-19) jeweils zur Hälfte auf zwei Parallelen zu diesen Hebeln (3, 4) liegen.

6. Präzisionsspalt nach Anspruch 5, dadurch gekennzeichnet, daß die auf einer Parallelen liegenden Gelenkpunkte (13-15) ortsfest und die auf der anderen Parallele liegenden Gelenkpunkte (17-19) senkrecht zur Bewegungsrichtung der Spaltbacken (1, 2) verschiebbar sind.

7. Präzisionsspalt nach Anspruch 1-6, dadurch gekennzeichnet, daß zur Einstellung der Spaltbreite ein mechanisches Hebelgestänge (30-33) vorgesehen ist, das eine geradlinige, senkrecht zur Bewegungsrichtung der Spaltbacken (1, 2) gerichtete Bewegung des Einstellgliedes (20) bewirkt.

8. Präzisionsspalt nach Anspruch 7, dadurch gekennzeichnet, daß zur Linearisierung der Einstellbewegung eine auf das Hebelgestänge (30-33) wirkende Kurvenscheibe (35) vorgesehen ist.

9. Präzisionsspalt nach Anspruch 1-6, dadurch gekennzeichnet, daß zur Bewegung des Einstellgliedes (20) ein motorischer Antrieb (40) vorgesehen ist.

10. Präzisionsspalt nach Anspruch 9, dadurch gekennzeichnet, daß die motorische Einstellbewegung über einen Positionierregelkreis (41) gesteuert ist.

11. Präzisionsspalt nach Anspruch 1-3, dadurch gekennzeichnet, daß die Führungs-Parallelogramme (9-12), die Spaltbacken (1, 2) und die diese tragenden Hebel (3, 4) monolithisch aus einer Platte (50) aus federndem Material hergestellt sind.

FIG.1

FIG. 2

# FIG. 3